(19) Europäisches Patentamt
European Patent Office
Office européen des brevets

(11) **EP 3 483 831 A1**

(12) **EUROPEAN PATENT APPLICATION**

(43) Date of publication:
**15.05.2019 Bulletin 2019/20**

(51) Int Cl.:
***G06T 5/00*** *(2006.01)*

(21) Application number: **17306577.2**

(22) Date of filing: **14.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **THOMSON LICENSING**
**92130 Issy les Moulineaux (FR)**

(72) Inventors:
• **HELLIER, Pierre**
  **35576 Cesson-Sévigné (FR)**
• **PEREZ, Patrick**
  **35576 Cesson-Sévigné (FR)**
• **CHAMARET, Christel**
  **35576 Cesson-Sévigné (FR)**

(74) Representative: **Vidon Brevets & Stratégie**
**16B, rue de Jouanet**
**BP 90333**
**35703 Rennes Cedex 7 (FR)**

(54) **METHOD AND DEVICE FOR MODIFYING A CONTRAST OF A VISUAL CONTENT**

(57)     A method including: obtaining a plurality of parts of an image of a visual content; determining relationships existing between the parts, the relationships comprising at least spatial relationships; for one of the parts, obtaining a transformation, corresponding to a contrast modification, as a function of the relationships, and applying said transformation to the part, to obtain a contrast modified part.

Figure 1

**Description**

1. TECHNICAL FIELD

The context of this disclosure is the modifying of a contrast of at least one visual content, like an image (picture) or a video, notably but not exclusively personal photos/videos taken with smartphones.

2. TECHNOLOGICAL BACKGROUND

Despite the increasing quality of images taken with smartphones (resolution sensor, optics, etc.), these images do not reach the quality of high-end devices, notably regarding contrast in low-light conditions.

More precisely, some images are taken in hectic illumination condition: some part of the scene is well exposed, while another part is not well exposed. For these images, a local contrast enhancement is needed.

Due to the explosion of images acquired with smartphones or cameras, there is a need for processing of such images.

There have been several techniques proposed in the literature for local contrast enhancement. Many of these techniques perform a local contrast enhancement by limiting the amount of contrast enhancement. Some methods try to incorporate perceptual models into their algorithm.

However, it is still of interest to propose an efficient, at least partially automatic and/or robust way of processing images.

3. SUMMARY

The present principles propose a method comprising:

- obtaining a plurality of parts of an image of a visual content;
- determining relationships existing between said parts, said relationships comprising at least spatial relationships;
- for at least one first of said parts:

  * obtaining a transformation, corresponding to a contrast modification, as a function of said relationships; and
  * applying said transformation to said first part, to obtain a contrast modified part.

According to at least one embodiment of the present disclosure, at least two of said parts have an overlapping surface.

According to at least one embodiment of the present disclosure, said obtaining the plurality of parts of the image comprises a fixed partitioning of said image into parts of fixed size.

According to at least one embodiment of the present disclosure, said obtaining the plurality of parts of the image comprises an adaptive partitioning of said image belonging to the group comprising:

- a recursive splitting according to at least one split criterion, notably a variance criterion and/or an estimated contrast criterion;
- a superpixel partitioning based on said image or on an estimated contrast of said image; and
- a semantic segmentation.

According to at least one embodiment of the present disclosure, said determining relationships comprises:

- obtaining a luminance histogram of each of said parts; and
- performing locally linear embedding based on the luminance histograms of said parts.

According to t least one embodiment of the present disclosure, said relationships also comprise at least one non-spatial relationship.

According to at least one embodiment of the present disclosure, said transformation for said first part comprises:

- estimating a target histogram for each of said parts by minimizing a cost function C having:

  * first and second terms aiming at finding a compromise, for each of said parts, between a uniform histogram and an input histogram of said part; and
  * a third term ensuring preservation of said relationships;

- obtaining the transformation for said first part as a function of the target histogram of said part.

According to at least one embodiment of the present disclosure, said cost function C reads as:

$$\mathcal{C} = \sum_{i=1}^{N} ( ||Y_i - X_i||^2 + \lambda ||Y_i - u||^2 + \gamma ||Y_i - \sum_{j \in \mathcal{V}(i)} w_{ij} Y_j||^2 )$$

where N is the number of said parts,
$Y_i$ is the target histogram of a ith part among the N parts,
$X_i$ is the input histogram of said ith part,
$u$ is the uniform histogram,
$V(i)$ is a set of neighbor parts each having a relationship with said ith part,
$w_{ij}$ is a weight associated to a relationship between said ith part and a jth part of the set of neighbor parts, and
$\lambda$ and $\gamma$ are parameters.

According to at least one embodiment of the present disclosure, for each of said parts, the parameter $\lambda$ is adjusted as follows: $\lambda = f(K)$, subject to a first constraint: $\lambda_0 = f(K_m)$ and/or to a second constraint: $0 = f(K_M)$

where K is an initial estimated contrast of said part,
$f$ is a decreasing function,
$\lambda_0$ is a maximum parameter,
$K_m$ is a minimum part contrast over said parts, and
$K_M$ is a maximum part contrast over said parts.

According to at least one embodiment of the present disclosure, said applying said transformation to said first part comprises:

- applying said transformation to a center pixel or barycenter pixel of said first part; and
- applying to the other pixels of said first part an interpolation of said transformation.

According to at least one embodiment of the present disclosure, said method comprises:

- determining at least one additional temporal relationship existing between at least one second part among said parts of said image and at least one third part of another image of said visual content;

and said obtaining of said transformation is also function of said additional temporal relationship.
According to at least one embodiment of the present disclosure, said third part of said another image belongs to the group comprising:

- a part of said other image having a same spatial position as the spatial position of said at least one second part in said image;
- a part of said other image having a neighboring spatial position close to the spatial position of said at least one second part in said image;
- a part of said other image with at least one non-spatial relationship with said at least one second part in said image; and
- a part of said other image with at least one non-spatial relationship with another part of said other image having the same spatial position in said other image as said at least one second part in said image.

According to at least one embodiment of the present disclosure, said at least one non-spatial relationship belongs to the group comprising:

- photometric relationships,
- luminance relationships,
- colorimetric relationships and
- semantic relationships.

According to at least one embodiment of the present disclosure, said method comprises, at least for a fourth part among said parts of said image:

- applying to said fourth part a combination of the transformation obtained for said fourth part with a transformation previously obtained for a fifth part of another image of said visual content, with said fourth part having at least one additional temporal relationship with said fifth part.

Another aspect of the present disclosure relates to a device comprising a computation machine (comprising notably at least one memory and/or at least one processor) configured to:

- obtain a plurality of parts of an image of a visual content;
- determine relationships existing between said parts, said relationships comprising at least spatial relationships;
- for each of said parts:

  * obtain, as a function of said relationships, a transformation corresponding to a contrast modification; and
  * apply said transformation to said part, to obtain a contrast modified part.

While not explicitly described, the electronic device of the present disclosure can be adapted to perform the method of the present disclosure in any of its embodiments.

According to another aspect, the present disclosure relates to an electronic device comprising at least one memory and at least one processing circuitry configured to:

- obtain a plurality of parts of an image of a visual content;
- determine relationships existing between said parts, said relationships comprising at least spatial relationships;
- for at least one first of said parts:

  * obtain, as a function of said relationships, a transformation corresponding to a contrast modification; and
  * apply said transformation to said first part, to obtain a contrast modified part.

According to an embodiment of the present disclosure, said at least one processing circuitry is adapted for:

- obtain a plurality of parts of an image of a visual content;
- determine relationships existing between said parts, said relationships comprising at least spatial relationships;
- for at least one first of said parts:

  * obtain, as a function of said relationships, a transformation corresponding to a contrast modification; and
  * apply said transformation to said first part, to obtain a contrast modified part.

While not explicitly described, the electronic device of the present disclosure can be adapted to perform the method of the present disclosure in any of its embodiments.

Another aspect of the present disclosure relates to a non-transitory computer program product comprising program code instructions for implementing the above method (according to any one of the embodiments), when said program is executed on a computer or a processor.

Notably, according to at least one embodiment of the present disclosure, said computer program product comprises program code instructions for performing, when said program is executed by a computer, a method comprising:

- obtaining a plurality of parts of an image of a visual content;
- determining relationships existing between said parts, said relationships comprising at least spatial relationships;
- for at least one first of said parts:

  * obtaining a transformation, corresponding to a contrast modification, as a function of said relationships; and
  * applying said transformation to said first part, to obtain a contrast modified part.

Another aspect of the present disclosure relates to a non-transitory computer-readable carrier medium storing the aforesaid computer program product.

Notably, according to at least one embodiment of the present disclosure, said non-transitory computer-readable carrier medium stores a computer program product comprising program code instructions for performing, when said program is executed by a computer, a method comprising:

- obtaining a plurality of parts of an image of a visual content;
- determining relationships existing between said parts, said relationships comprising at least spatial relationships;
- for at least one first of said parts:

  * obtaining a transformation, corresponding to a contrast modification, as a function of said relationships; and
  * applying said transformation to said first part, to obtain a contrast modified part.

## 4. LIST OF FIGURES

Other features and advantages of embodiments shall appear from the following description, given by way of indicative and non-exhaustive examples and from the appended drawings, of which:

- Figure 1 is a flowchart of a method according to a first embodiment;
- Figure 2 is a flowchart of a method according to a second embodiment; and
- Figure 3 shows the simplified structure of a device according to an embodiment.

## 5. DETAILED DESCRIPTION

In all the figures of the present document, similar elements or steps are designated by the same numerical reference sign.

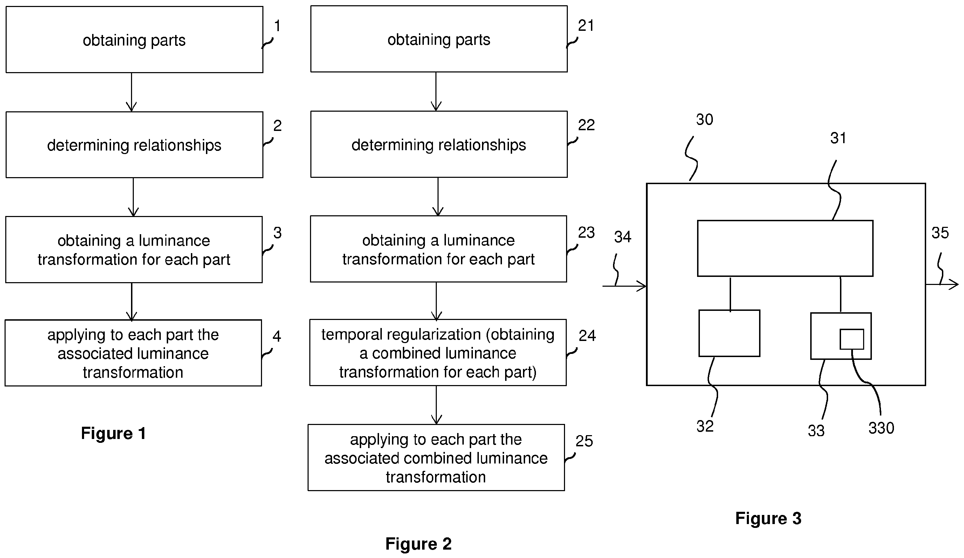

**Figure 1** is a flowchart of a method, according to a first embodiment of the present disclosure. The method is carried out by a device (see figure 3) for modifying a contrast of at least one visual content, like an image (picture) or a video.

Such a modification of contrast is for instance a local contrast enhancement.

In at least some embodiment, the local contrast enhancement can be performed in view of taking into account at least some of the below constraints:

- some constraint of spatially consistency: the luma (luminance) amplification shall be smooth,
- some constraint of structure consistency: the luma (luminance) amplification shall be similar for all parts of the scene that are exposed similarly, and
- some constraint of temporally consistency: results should be stable over time.

The first embodiment can be summarized as follows:

- in a step 1, the device obtains a plurality of parts of the image, by a fixed or adaptive partitioning of the image (parts being also referred to as "region", "block", "patch", "superpixel", etc.);
- in a step 2, the device determines relationships existing between the parts obtained in step 1;
- in a step 3, for at least one part, the device obtains a transformation, corresponding to a contrast modification, as a function of the relationships determined in step 2; and
- in a step 4, the device applies the transformation to the part, to obtain an enhanced contrast part.

Each of steps 1 to 4 is detailed below.

Step 1

In a first implementation, there is no overlap between parts (i.e. parts are disjoints). In a second implementation, there is an overlap between parts (i.e. parts are not disjoints), in order to ensure a first level of spatial regularity, also referred to as "spatial continuity". Another level of spatial regularity is detailed below, in the description of step 4). In a third implementation (mix of first and second implementations), there is no overlap between some parts, and there is an overlap between other parts, e.g. depending on the content of the parts.

In a first implementation of step 1, the plurality of parts of the image are obtained by a fixed partitioning of the image into parts of fixed size (i.e. a regular partition).

In a second implementation of step 1, the plurality of parts of the image are obtained by a recursive splitting (e.g. a quadtree) according to at least one split criterion. The split criterion can be based on the image variance (variance criterion) and/or on the estimated image contrast (estimated contrast criterion). In the second implementation, partitioning the image according to its contrast can enable to perform adaptive contrast enhancement, where transformations are only applied to some parts of the image. Notably parts where the contrast is already above a certain value (or in other words parts being already well contrasted) will not be further enhanced. The partition can be obtained using the following algorithm:

- split the image regularly using $N_0$ parts;
- at each iteration (repeat until the maximum number of parts allowed has not been reached): determine the median value for variance and contrast on parts, and split the parts that are below a linear combination of these values.

In a third implementation of step 1, the plurality of parts of the image are obtained by a superpixel partitioning based on the image itself or on an estimated initial contrast of the image. The contrast can be estimated with different methods, notably some known methods, like RMS ("Root Mean Square") method, SDM ("Supervised Descent Method") method, Michelson method, etc.

In a fourth implementation of step 1, the plurality of parts of the image are obtained by a semantic segmentation. In this case, the solution described below remains valid and the center of a part (object) is replaced by the center of mass (barycenter) of the part (object).

Step 2

We assume that in step 1 the image has been partitioned in N parts.

In step 2, the device determines relationships existing between the N parts of the image, by computing a histogram for each of the N parts and performing Locally Linear Embedding (LLE) based on the luminance histograms of the N parts.

An exemplary LLE method is detailed for instance in the following article: Roweis, S. T., & Saul, L. K. (2000), "Nonlinear dimensionality reduction by locally linear embedding", Science, 290(5500), 2323-2326.

In an exemplary embodiment, the histogram computed for each of the N parts is a luminance histogram (computed using d bins), i.e. a histogram of luma (luminance) values. For example, each part of the image is assimilated to the luminance histogram in Y channel of the YUV color space.

Hence, each part i of the image, with $i \in \{1... N\}$, can be represented by a histogram vector $X_i \in \mathbb{R}^d$.

LLE is used to compute a weight matrix $W = [w_{ij}]_{i,j}$ which provides for each part i, the approximation of its histogram as a linear combination (with weights summing up to one) of those of most resembling parts in the collection: $X_i \approx \sum_{j \in V(i)} w_{ij} X_j$, where $V(i)$ is the neighborhood of part i (i.e. the set of neighboring parts having relationships with part i). In other words, the weight matrix W encodes the relationships between the N parts.

LLE can be performed using many types of relationships.

In some embodiment, the relationships can comprise only spatial (or in other word local) relationships. In this case, we obtain in step 2 a weight matrix $W_s$ encoding the spatial relationships. For each part, the spatial neighbors are used to compute the local weights. The weights reflect the linear approximation of each part by its neighbors.

In another embodiment, the relationships can also comprise at least one non-spatial (or in other word non-local) relationship (for example of at least one of the following types: photometric relationships, luminance relationships, colorimetric relationships and semantic relationships). In this case, we obtain in step 2 a weight matrix $W_n$ encoding the non-local relationships. For each part, a k-nn (nearest neighbor) algorithm is used to retrieve the k nearest neighbors (for instance, for luminance relationships, parts belonging to the same object exposed similarly). The final weight matrix W is a linear combination of the weight matrices $W_s$ and $W_n$.

In another alternative embodiment, we assume that the image (referred to as "first image") is comprised in a video. The relationships which are determined by the device also comprise at least one additional temporal relationship existing between at least one first part (among said N parts of the first image) and at least one second part of another image (referred to as "second image") of the video.

In a first implementation, the at least one second part in the second image can be a part of the second image having a same spatial position as the spatial position of the at least one first part in the first image.

In a second implementation, the at least one second part in the second image can be a part of the second image having a neighboring spatial position close to the spatial position of the at least one first part in the first image.

In a third implementation, the at least one second part in the second image can be a part of the second image with at least one non-spatial relationship with the at least one first part in said image.

In a fourth implementation, the at least one second part in the second image can be a part of the second image with at least one non-spatial relationship with another part of the second image having the same spatial position in the second image as the spatial position of the at least one first part in the first image.

In the third and fourth implementations, the non-spatial relationship can be for example of at least one of the types already mentioned above: photometric relationships, luminance relationships, colorimetric relationships and semantic relationships.

Step 3

In step 3, a transformation (e.g. a luminance transformation, also called LUT, corresponding to the contrast modification) can be obtained for at least one of said parts, called herein after "candidate part". Depending upon embodiments a transformation can be obtained for all the obtained plurality of parts of the image, or only for some of the obtained plurality of parts The transformation can be obtained as a function of the relationships determined in step 2. To this end, a contrast enhancement for all the N parts can be seen as an optimization problem.
More precisely, the device can:

- estimate a target histogram for each part by minimizing a cost function C having:

    * first and second terms aiming at finding a compromise (or in other words a balance), for each part, between a uniform histogram and an input histogram of this each part; and
    * a third term ensuring the consistency of the relationships between parts;

- for the candidate part, obtain the transformation as a function of the target histogram of this candidate part.

In an exemplary embodiment, the cost function C can read as:

$$ \mathcal{C} = \sum_{i=1}^{N} ( ||Y_i - X_i||^2 + \lambda||Y_i - u||^2 + \gamma||Y_i - \sum_{j \in \mathcal{V}(i)} w_{ij} Y_j||^2) $$

where $N$ is the number of parts,
$Y_i$ is the target histogram of a ith part among the N parts,
$X_i$ is the input histogram of said ith part,
$u$ is the uniform histogram,
$V(i)$ is a set of neighbor parts each having a relationship with said ith part,
$w_{ij}$ is a weight associated to a relationship between said ith part and a jth part of the set of neighbor parts, and
$\lambda$ and $\gamma$ are parameters.

For each part, the target histogram can be used as in Histogram Equalization (HE), where the luma (luminance) transformation can be obtained through the cumulative distribution function. Let us denote p as the normalized histogram from the target histogram, computed on $2^n$ values. Then the transformation reads as:

$$ T(i) = (2^n - 1) \sum_{j=0}^{i} p(j) + 0.5 $$

In an exemplary embodiment, for each part of the image, the device can adapt the parameter $\lambda$ to the initial contrast measure on the image: $\lambda = f(K)$, subject to a first constraint:

$$ \lambda_0 = f(K_m), $$

where K is an initial estimated contrast of the part (e.g. measured as the integral over the part of a computed contrast map),
$f$ is a decreasing function (e.g. specified by a user),
$\lambda_0$ is a maximum parameter, and
$K_m$ is the minimum contrast over the N parts.

In an alternative embodiment, a second constraint can be added to the first one: $0 = f(K_M)$, where $K_M$ is the maximum contrast over the N parts.

Step 4

In an exemplary embodiment, the device can apply the transformation to the candidate part by applying the transformation to a center pixel (or barycenter pixel) of the candidate part and by applying to the other pixels of the part an interpolation of the transformation (e.g. a spline interpolation). This can help ensuring a spatial regularity.

**Figure 2** is a flowchart of a method for local contrast enhancement according to a second embodiment with a temporal regularization to ensure stability. We assume the image is comprised in a video.

Steps 21 to 23 can be identical to steps 1 to 3 of figure 1.

In step 24, for a first part of a first image, the device can combine (e.g. by a linear combination) the transformation obtained for the first part with a (at least one) transformation previously obtained for a (at least one) second part of a (at least one) second image of the video, with the first part and the (at least one) second part having correlated spatial positions in the first image and (at least one) second image respectively.

In step 25, the device can apply to the first part of the first image the combined transformation resulting from step 24.

From the above description, it is understood that the proposed solution is a new local contrast enhancement method that can, in at least some embodiment, have the following advantages (or some of them, depending on the embodiment):

- helping ensuring consistency over the parts (i.e. similar parts of the image are modified (for instance enhanced) similarly or almost similarly);
- helping producing a contrast-adaptive enhancement, when the image partition is based on the initial image variance;
- helping being more robust (i.e. results are stable, especially compared to state-of-the-art techniques);
- helping performing better at preserving colors; and
- helping requiring less parameter tuning.

**Figure 3** shows the simplified structure of a device 30 for modifying local contrast according to an embodiment. The device 30 can be used in consumer electronics (for example, in a smartphone or a digital TV).

The device 30 comprises a non-volatile memory 33 (e.g. a read-only memory (ROM) or a hard disk), a volatile memory 32 (e.g. a random access memory or RAM) and a processor (computation machine) 31. The non-volatile memory 33 is a non-transitory computer-readable carrier medium. It stores executable program code instructions 330, which are executed by the processor 31 in order to enable implementation of the method described above (in either embodiments of figures 1 and 2). Upon initialization, the program code instructions 330 are transferred from the non-volatile memory 33 to the volatile memory 32 so as to be executed by the processor 31. The volatile memory 32 likewise includes registers for storing the variables and parameters required for this execution. The input 34 comprises an image (or several images) and the output 35 comprises a modified image (for instance an enhanced image) or several modified or enhanced images.

All the steps of the method described above (see figures 1 and 2) can be implemented by the device 30, equally well:

- by the execution of a set of program code instructions executed by a reprogrammable computing machine such as a PC type apparatus, a DSP (digital signal processor) or a microcontroller. This set of program code instructions can be stored in a non-transitory computer-readable carrier medium that is detachable (for example a floppy disk, a CD-ROM or a DVD-ROM) or non-detachable; or
- by a dedicated computing machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it can also be implemented in hardware form, or any form combining a hardware portion and a software portion.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that an exemplary feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and micro-instruction code. The various processes and functions described herein may be either part of the micro-instruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1.  Method comprising:

    - obtaining (1, 11) a plurality of parts of an image of a visual content;
    - determining (2, 22) relationships existing between said parts, said relationships comprising at least spatial relationships;
    - for at least one first of said parts:

        * obtaining (3, 23, 24) a transformation, corresponding to a contrast modification, as a function of said relationships; and
        * applying (4, 25) said transformation to said first part, to obtain a contrast modified part.

2.  Method according to claim 1, wherein at least two of said parts have an overlapping surface.

3.  Method according to claim 1 or 2, wherein said obtaining the plurality of parts of the image comprises a fixed partitioning of said image into parts of fixed size.

4.  Method according to claim 1 or 2, wherein said obtaining the plurality of parts of the image comprises an adaptive partitioning of said image belonging to the group comprising:

    - a recursive splitting according to at least one split criterion, notably a variance criterion and/or an estimated contrast criterion;
    - a superpixel partitioning based on said image or on an estimated contrast of said image; and
    - a semantic segmentation.

5.  Method according to any one of the claims 1 to 4, wherein said determining relationships comprises:

    - obtaining a luminance histogram of each of said parts; and
    - performing locally linear embedding based on the luminance histograms of said parts.

6.  Method according to any one of the claims 1 to 5, wherein said relationships also comprise at least one non-spatial relationship.

7.  Method according to any one of the claims 1 to 6, wherein said obtaining said transformation for said first part comprises:

- estimating a target histogram for each of said parts by minimizing a cost function C having:

* first and second terms aiming at finding a compromise, for each of said parts, between a uniform histogram and an input histogram of said part; and
* a third term ensuring preservation of said relationships;

- obtaining the transformation for said first part as a function of the target histogram of said part.

**8.** Method according to claim 7, wherein said cost function C reads as:

$$\mathcal{C} = \sum_{i=1}^{N} \left( ||Y_i - X_i||^2 + \lambda ||Y_i - u||^2 + \gamma ||Y_i - \sum_{j \in \mathcal{V}(i)} w_{ij} Y_j||^2 \right)$$

where $N$ is the number of said parts,
$Y_i$ is the target histogram of a ith part among the N parts,
$X_i$ is the input histogram of said ith part,
$u$ is the uniform histogram,
$V(i)$ is a set of neighbor parts each having a relationship with said ith part,
$w_{ij}$ is a weight associated to a relationship between said ith part and a jth part of the set of neighbor parts, and
$\lambda$ and $\gamma$ are parameters.

**9.** Method according to claim 8, wherein, for each of said parts, the parameter $\lambda$ is adjusted as follows: $\lambda = f(K)$, subject to a first constraint: $\lambda_0 = f(K_m)$ and/or to a second constraint: $0 = f(K_M)$

where K is an initial estimated contrast of said part,
$f$ is a decreasing function,
$\lambda_0$ is a maximum parameter,
$K_m$ is a minimum part contrast over said parts, and
$K_M$ is a maximum part contrast over said parts.

**10.** Method according to any one of the claims 1 to 9, wherein applying said transformation to said first part comprises:

- applying said transformation to a center pixel or barycenter pixel of said first part; and
- applying to the other pixels of said first part an interpolation of said transformation.

**11.** Method according to any one of the claims 1 to 10, wherein said method comprises:

- determining (22) at least one additional temporal relationship existing between at least one second part among said parts of said image and at least one thirdpart of another image of said visual content, ;

and wherein said obtaining (23) of said transformation is also function of said additional temporal relationships.

**12.** Method according to claim 11, wherein said third part of said another image belongs to the group comprising:

- a part of said other image having a same spatial position as the spatial position of said at least one second part in said image;
- a part of said other image having a neighboring spatial position close to the spatial position of said at least one second part in said image;
- a part of said other image with at least one non-spatial relationship with said at least one second part in said image; and
- a part of said other image with at least one non-spatial relationship with another part of said other image having the same spatial position in said other image as said at least one second part in said image.

**13.** Method according to claim 6 or 12, wherein said at least one non-spatial relationship belongs to the group comprising:

- photometric relationships,

- luminance relationships,
- colorimetric relationships and
- semantic relationships.

**14.** Method according to any one of the claims 1 to 13, wherein said method comprises, at least for a fourth part among said parts of said image:

- applying (25) to said fourth part a combination of the transformation obtained for said fourth part with a transformation previously obtained for a fifthpart of another image of said visual content, said fourth part having at least one additional temporal relationship with said fifth part.

**15.** Device (30) comprising a computation machine (31) configured to:

- obtain a plurality of parts of an image of a visual content;
- determine relationships existing between said parts, said relationships comprising at least spatial relationships;
- for at least one first of said parts:

  * obtain, as a function of said relationships, a transformation corresponding to a contrast modification; and
  * apply said transformation to said first part, to obtain a contrast modified part.

**Figure 3**

- 35
- 31
- 330
- 33
- 30
- 32
- 34

**Figure 2**

| | |
|---|---|
| obtaining parts | 21 |
| determining relationships | 22 |
| obtaining a luminance transformation for each part | 23 |
| temporal regularization (obtaining a combined luminance transformation for each part) | 24 |
| applying to each part the associated combined luminance transformation | 25 |

**Figure 1**

| | |
|---|---|
| obtaining parts | 1 |
| determining relationships | 2 |
| obtaining a luminance transformation for each part | 3 |
| applying to each part the associated luminance transformation | 4 |

Europäisches
Patentamt

European
Patent Office

Office européen
des brevets

# EUROPEAN SEARCH REPORT

Application Number

EP 17 30 6577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2014/355899 A1 (JIN HAILIN [US] ET AL) 4 December 2014 (2014-12-04)<br>* paragraph [0018] *<br>* paragraph [0023] - paragraph [0054] *<br>* claims 1-9 *<br>----- | 1,10-12, 14,15<br>5-9,13 | INV.<br>G06T5/00 |
| Y | EP 3 046 071 A1 (THOMSON LICENSING [FR]) 20 July 2016 (2016-07-20)<br>* paragraph [0014] - paragraph [0036] *<br>----- | 5-9,13 | |
| X<br>Y | US 2011/142342 A1 (OTSUKI SEICHI [JP] ET AL) 16 June 2011 (2011-06-16)<br>* paragraph [0046] - paragraph [0077] *<br>----- | 1,3,10, 15<br>5-9,13 | |
| X<br>Y | EP 1 515 274 A1 (SONY INT EUROPE GMBH [DE]) 16 March 2005 (2005-03-16)<br>* paragraph [0054] - paragraph [0060] *<br>----- | 1,2,10, 15<br>5-9,13 | |
| X<br>Y | US 6 771 814 B1 (NAKAJIMA MASATO [JP]) 3 August 2004 (2004-08-03)<br>* column 6, line 63 - column 11, line 2 *<br>----- | 1,4,10, 15<br>5-9,13 | TECHNICAL FIELDS SEARCHED (IPC) |
| A | MENOTTI D ET AL: "Multi-Histogram Equalization Methods for Contrast Enhancement and Brightness Preserving", IEEE TRANSACTIONS ON CONSUMER ELECTRONICS, IEEE SERVICE CENTER, NEW YORK, NY, US, vol. 53, no. 3, August 2007 (2007-08), pages 1186-1194, XP011193667, ISSN: 0098-3063, DOI: 10.1109/TCE.2007.4341603<br>* page 1190 - page 1191 *<br>----- | 1-15 | G06T |

The present search report has been drawn up for all claims

| Place of search | Date of completion of the search | Examiner |
|---|---|---|
| Munich | 12 February 2018 | Rockinger, Oliver |

EPO FORM 1503 03.82 (P04C01)

## ANNEX TO THE EUROPEAN SEARCH REPORT
## ON EUROPEAN PATENT APPLICATION NO.

EP 17 30 6577

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | | Publication date | Patent family member(s) | | Publication date |
|---|---|---|---|---|---|
| US 2014355899 | A1 | 04-12-2014 | NONE | | |
| EP 3046071 | A1 | 20-07-2016 | EP 3046071 A1 | | 20-07-2016 |
| | | | TW 201631554 A | | 01-09-2016 |
| | | | WO 2016113407 A1 | | 21-07-2016 |
| US 2011142342 | A1 | 16-06-2011 | CN 102123288 A | | 13-07-2011 |
| | | | JP 2011124800 A | | 23-06-2011 |
| | | | US 2011142342 A1 | | 16-06-2011 |
| EP 1515274 | A1 | 16-03-2005 | NONE | | |
| US 6771814 | B1 | 03-08-2004 | EP 1093295 A2 | | 18-04-2001 |
| | | | EP 1939808 A1 | | 02-07-2008 |
| | | | JP 3902894 B2 | | 11-04-2007 |
| | | | JP 2001113754 A | | 24-04-2001 |
| | | | US 6771814 B1 | | 03-08-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROWEIS, S. T. ; SAUL, L. K.** Nonlinear dimensionality reduction by locally linear embedding. *Science,* 2000, vol. 290 (5500), 2323-2326